# EUROPÄISCHE PATENTSCHRIFT

(11) **EP 2 886 898 B1**
(45) Veröffentlichungstag und Bekanntmachung des Hinweises auf die Patenterteilung: **23.08.2017**
(21) Anmeldenummer: 14194638.4
(22) Anmeldetag: 25.11.2014
(51) Int. Cl.: F16D 23/14, F16D 25/08, F16D 13/58

(54) **Kupplung mit deckelfestem Ausrücker**
Coupling with fixed cover shifter
Couplage doté d'un dispositif de débrayage à chapeau fixe

(30) Priorität: 17.12.2013 DE 102013226245
(43) Veröffentlichungstag der Anmeldung: 24.06.2015
(73) Patentinhaber: Schaeffler Technologies AG & Co. KG, 91074 Herzogenaurach (DE)
(72) Erfinder: Röll, Marcel, 77815 Bühl (DE); Kotljarow, Valeri, 77743 Schutterzell (DE); Stoll, Christian, 76131 Karlsruhe (DE)

(56) Entgegenhaltungen:
- EP-A1- 1 380 765
- WO-A1-92/06312
- DE-A1- 3 325 202
- DE-A1-102010 023 716
- FR-A1- 2 834 024

## Beschreibung

Die vorliegende Erfindung betrifft eine Kupplung gemäß dem Oberbegriff des Patentanspruchs 1. Insbesondere betrifft die Erfindung eine Kupplung mit einem deckelfesten Ausrücker, wobei ein Kupplungsdeckel der Kupplung mittelbar über ein Stützelement mit einer Stützlagerung den Ausrücker axial in deckelfester Position hält.

In der Automobiltechnik werden Reibungskupplungen standardmäßig in Verbindung mit Getrieben eingesetzt. Deckelfeste Ausrücker sind Vorrichtungen, die beispielsweise hydraulisch aktivierbar sind, und zur Einleitung des Kupplungsvorganges verwendet werden. Im deckelfesten Ausrücker ist ein Nehmerzylinder integriert, der es ermöglicht eine rotierende Tellerfeder axial mittels eines Ausrücklagers zu betätigen. Die Tellerfeder stützt sich auf einem Kupplungsdeckel ab und ist gegenüber einem Aufpressring vorgespannt, der zur Herstellung der Kopplung mit einer Zentralplatte vorgesehen ist. Durch die Betätigung in einem radialen Innenbereich, der an der Tellerfeder mittels radial verlaufender Zungen gebildet wird, kann die Beaufschlagung der Anpressplatte durch die Tellerfeder beim Kupplungsvorgang aufgehoben werden.

Aus DE 10 2012 200 621 A1 ist ein Ausrücker bekannt, dessen Stützlager axial nehmerzylinderseitig angeordnet ist. Über ein Verbindungselement stellt das Stützlager eine Verbindung zum Kupplungsdeckel her, womit der Ausrücker axial in seiner Position zum Kupplungsdeckel gehalten wird.

Reibungskupplungen mit deckelfesten Ausrückern weisen zusätzliche Bauteile auf und tragen damit zur Bauraumproblematik bei, die sich gerade in Verbindung mit der Montage eines solchen deckelfesten Ausrückers als Herausforderung erweist.

Im vorgenannten Stand der Technik wird versucht, einen verkleinerten Bauraum zu erzielen, der dennoch eine vereinfachte Montage des deckelfesten Ausrückers erlaubt.

Deckelfeste Ausrücker werden auch in Verbindung mit Doppelkupplungen eingesetzt, die den Kupplungskomfort deutlich steigern und ebenfalls vorteilhaft mit deckelfesten Ausrückern zusammenarbeiten. Deckelfeste Ausrücker können daher beispielsweise mit Kupplungen kombiniert werden, wie sie aus der DE 2013 2001 269 A1 bekannt sind.

Aus der DE 10 2010 023 716 A1 ist eine Kupplung bekannt, die auf den Oberbegriff des Patentanspruchs 1 lesbar ist.

Der Erfindung liegt die Aufgabe zugrunde, Bauraum optimal zu nutzen und gleichzeitig die Montage eines deckelfesten Ausrückers inklusive Kupplung zu vereinfachen ohne die Funktionseigenschaften zu tangieren oder hohe Herstellungskosten zu verursachen.

Der Erfindung liegt die Erkenntnis zugrunde, dass eine Stützlagerung vorteilhafterweise einen geringen Teilkreisradius der Wälzkörper aufweisen sollte, womit eine geringere Reibung erzielt und die Stützlagerung kostengünstiger aufgebaut werden kann. In bisherigen Anordnungen wurden Bauteile des Stützlagers an einen Kupplungsdeckel oder an einer Kupplungsglocke befestigt, die den erforderlichen Bauraum axial erweitert haben.

Diese Aufgabe wird erfindungsgemäß durch eine Kupplung gemäß Patentanspruch 1 gelöst, in der eine Tellerfeder zur Beaufschlagung einer Kupplungskraft axial teilweise zwischen dem Kupplungsdeckel und dem Stützelement angeordnet ist. Die Anordnung des Stützelements mit dessen Stützlagerung wird also axial in Richtung der Zentralplatte oder Anpressplatte verschoben, womit der Bauraum radial innenliegend von der Anpressplatte weiter genutzt werden kann, um eine Verbindung zwischen Kupplungsdeckel und Ausrücker herzustellen, wobei der Ausrücker in seiner axialen Position fixiert wird und gegenüber dem drehbaren Kupplungsdeckel gelagert ist. Damit werden sowohl die axiale Betätigungsbewegung des Ausrückers als auch die Rotationsbewegung der Kupplung, insbesondere des Kupplungsdeckels, vorteilhaft unterstützt.

Bevorzugte Ausführungsbeispiele sind in den abhängigen Patentansprüchen dargelegt.

Die Deckelfestigkeit des Ausrückers ist vorteilhafterweise über eine Vielzahl von Bauteilen herstellbar, sodass sowohl zwischen dem Kupplungsdeckel und dem Stützelement, als auch zwischen dem Stützelement und der Stützlagerung, und genauso zwischen der Stützlagerung und dem Ausrücker Bauteile angeordnet werden können, die die axiale Haltekraft des Kupplungsdeckels auf den Ausrücker übertragen.

Wichtig ist, dass die Haltung des Stützelementes mittels des Kupplungsdeckels durch wenigstens ein Bauteil, nämlich die Tellerfeder hindurch geschieht. Des Weiteren kann die Haltung auch durch andere Elemente der Kupplung hindurch erfolgen. Vorteilhafterweise kann die Stützlagerung dadurch radial sehr klein ausgeführt werden und mit Bauteilen, deren radiale Abmessungen einen Minimalwert nicht unterschreiten, kombiniert werden. Auf diese Weise ist eine optimale Nutzung des Bauraumes möglich, womit auch die axiale Ausdehnung der Kupplung trotz deckelfestem Ausrücker deutlich verbessert ist.

Bei einer vorteilhaften Ausführungsform ist der Kupplungsdeckel mittels Befestigungselementen, insbesondere Bolzen oder Schrauben, am Stützelement befestigt. Die Bolzen können auch mit einer Schraubenanordnung oder Schraube ersetzt werden, in jedem Fall dienen die Befestigungselemente dazu, eine axiale Verbindung zwischen Kupplungsdeckel und Stützelement herzustellen. Dabei verlaufen die Befestigungselemente durch die Tellerfeder hindurch, die die Befestigungselemente in einem scheibenförmigen Bereich mit Ausnehmungen umfasst, wobei die Ausnehmungen beispielsweise von zwei das Befestigungselement umfassenden Zungen gebildet werden können. Mit anderen Worten, die Ausnehmungen sind lokale Erweiterungen des Spaltes zwischen zwei benachbarten Tellerfederzungen, die um die Befestigungselemente herum ein Tellerfederfenster ausbilden. Die Bolzen, Schrauben oder andere Befestigungselemente können ferner durch weitere Elemente der Kupplung hindurch geführt werden, um die Haltung des Stützelementes zu gewährleisten.

Die Befestigungselemente, insbesondere Bolzen oder Schrauben, die den Kupplungsdeckel mit dem Stützelement verbinden, sind vorteilhafterweise als Zentrierelemente, insbesondere Zentrierbolzen für eine Stützfeder der Kupplung, ausgeführt. Zur Verbesserung oder Vereinfachung der Herstellung ist es vorteilhaft, wenn die Befestigungselemente mit dem Kupplungsdeckel und/oder mit dem Stützelement vernietet sind. Dies reduziert die Bauteilanzahl, wobei der Herstellungsprozess vereinfacht und beschleunigt wird.

Bei einer vorteilhaften Ausführungsform ist wenigstens ein Befestigungsbereich des Stützelementes in Radialrichtung zungenförmig ausgebildet und mehrere zungenförmige Befestigungsbereiche sind in Umfangsrichtung von Radialsenkungen separiert. Somit wird einerseits durch die zungenförmigen Befestigungsbereiche die Übertragung einer Haltekraft gewährleistet und gleichzeitig können die Radialsenkungen zu einer Reduktion der drehenden Masse führen. Außerdem werden Herstellungskosten durch den geringeren Materialverbrauch am Stützelement gesenkt.

Eine vorteilhafte Ausführungsform des Stützelementes weist, insbesondere in einem radialen Mittelbereich, strukturverstärkende Ausformungen, insbesondere Sicken, auf. Bei den Ausformungen kann es sich beispielsweise um Senken, Rippen oder Stege handeln, die es erlauben trotz einer Rotation in Radialrichtung eine Haltekraft weiterzugeben. Insbesondere Sicken sind vorteilhaft, die in Radialrichtung eine breite Rinne definieren und insbesondere in einem Mittelbereich des Stützelementes für strukturelle Stabilität sorgen. Der Mittelbereich ist ein Bereich zwischen dem radial außenliegenden Befestigungsbereich und dem radial innenliegenden Anschlussbereich oder einer Stützlageraufnahme.

Zur optimalen Ausnutzung des Bauraumes wird das Stützelement beispielsweise radial von der Anpressplatte umfasst. Ferner ist das Stützelement vorteilhaft mit einer Stützfeder kombinierbar, zumal beide genannten Bauelemente unterschiedliche Radialbereiche abdecken und von daher an der gleichen Axialstelle anordenbar sind. Des Weiteren ist es möglich, dass das Stützelement in der Nähe einer Zentralplatte oder Anpressplatte angeordnet wird, um keine funktionalen Nachteile in Kauf nehmen zu müssen.

Vorteilhafter Weise ist das Stützelement axial zwischen der Tellerfeder und der Kupplungsscheibe angeordnet. Hierbei handelt es sich um die Tellerfeder, die mittels des Kupplungsdeckels eine definierte Kupplungskraft auf den Aufpressring aufbringt, und damit dem Kupplungsdeckel zugeordnet ist. Es ist durchaus möglich, dass im Rahmen einer Doppelkupplung, eine weitere Tellerfeder zwischen Stützelement und der Kupplungsscheibe angeordnet ist, wobei diese zweite Tellerfeder Bestandteil einer zweiten Kupplung sein kann.

Bei einer vorteilhaften Ausführungsform ist eine Stützlageraufnahme mittels einer Hülse ausgebildet, wobei die Hülse einstückig mit dem Stützelement ausgeführt ist oder ein separates Bauteil bildet. Insbesondere als separates Bauteil ist es möglich, die Hülse in Axialrichtung sehr lang auszulegen, womit ein besonders breiter Stützlagertyp verwendbar wird. Alternativ kann eine Topfung im Bereich der Lageraufnahme des Stützelementes umgesetzt werden, indem das Stützelement im Aufnahmebereich kalt umgeformt wird. Dies kann beispielsweise in Verbindung mit einem Stanzvorgang geschehen, bei dem ein kreisförmiges Stück aus dem Zentralbereich des Stützelementes entfernt wird. Eine separate Hülse muss zwar an das Stützelement angeschweißt oder anderweitig befestigt werden, aber eine Lageraufnahme, insbesondere als zylindrische Lageraufnahme, ist damit präziser herstellbar.

Bei einer vorteilhaften Ausführungsform ist die Stützlagerung auf einer Führungshülse oder auf einem Nehmerzylindergehäuse des Ausrückers befestigt. Dabei ist es vorteilhaft, wenn diese Führungshülse oder das Nehmerzylindergehäuse einen besonders kleinen Außenradius aufweist. Damit kann der Teilkreisradius der Wälzkörper in der Stützlagerung so klein wie möglich gewählt werden, womit die Herstellungskosten für das Lager als auch dessen Reibwiderstand deutlich gesenkt werden. Außerdem ist das Stützlager in einem Bereich des Ausrückers anordenbar, der ansonsten mit vergleichsweise wenigen Komponenten beschlagen ist. Eine Installation ist damit vergleichsweise einfach, insbesondere können dabei Standardlager verwendet werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können.

Weitere Vorteile und vorteilhafte Weiterbildungen können der Figurenbeschreibung und/oder den Unteransprüchen entnommen werden.

Es zeigen:
- Fig. 1: eine Reibungskupplung mit deckelfestem Ausrücker in Schnittdarstellung entlang der Betätigungsachse, wobei das Stützelement über Bolzen am Kupplungsdeckel befestigt ist,
- Fig. 2: eine Schnittdarstellung in perspektivischer Ansicht einiger Bauteile aus Fig. 1,
- Fig. 3: die Kupplung aus Fig. 1 ohne Stützlager und ohne Ausrücker in Schnittdarstellung,
- Fig. 4A: ein Stützelement mit sechs Befestigungslöchern,
- Fig. 4B: das Stützelement aus Fig. 4A in geschnittener, perspektivischer Ansicht,
- Fig. 5A: ein zweites Ausführungsbeispiel eines Stützelementes in perspektivischer Schnittdarstellung,
- Fig. 5B: das Stützelement aus Fig. 5A in einer zweiten geschnittenen Ansicht,
- Fig. 5C: das vollständige Stützelement aus Fig. 5A in perspektivischer Ansicht,
- Fig. 6A: ein sternförmiges Stützelement in perspektivischer Ansicht,
- Fig. 6B: das sternförmige Stützelement aus Fig. 6A in einer zweiten perspektivischen Ansicht,
- Fig. 7: die Kupplung aus den Fig. 1 bis 3 mit einem radial innerhalb des Aufpressrings angeordneten Stützelement,
- Fig. 8: das Stützelement aus Fig. 7 in geschnittener, perspektivischer Ansicht, und
- Fig. 9: ein weiteres materialarmes Stützelement in perspektivischer Ansicht.

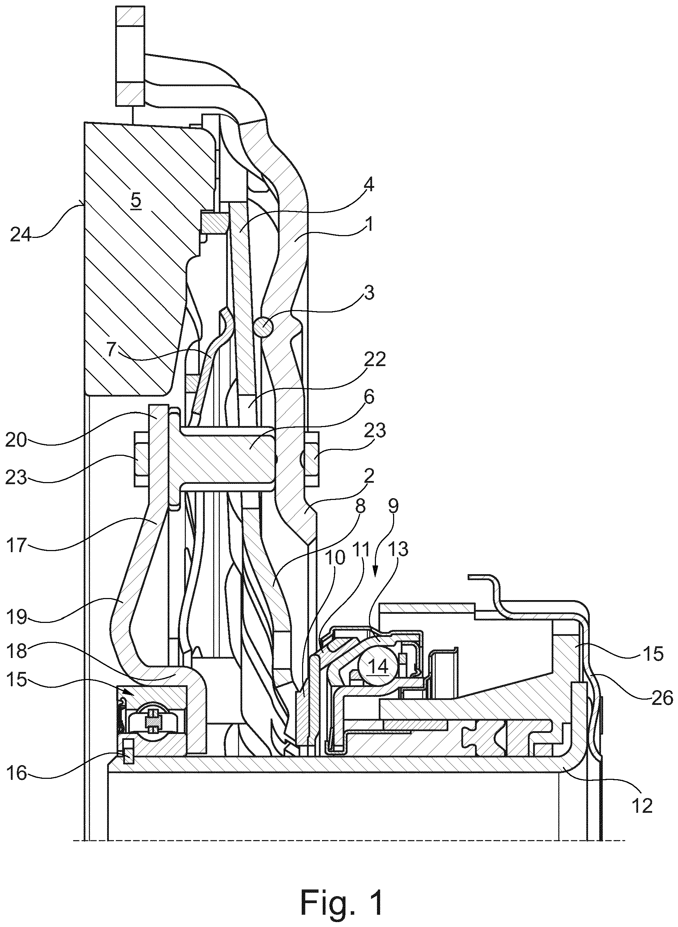

Wie in Fig. 1 zu sehen, ist auf der Führungshülse 12 eine Ausrückanordnung montiert, die mittels eines Nehmerzylindergehäuses 15 einen hydraulischen Nehmerzylinder ausbildet, wobei der Nehmerzylinder mittels eines am Kupplungspedal angeordneten Geberzylinders hydraulisch aktivierbar ist. Der Geberzylinder und die hydraulische Wirkverbindung zwischen dem Geberzylinder und dem Nehmerzylindergehäuse 15 sind nicht abgebildet. Vorteilhafterweise ist das Stützlager 15 nicht am oder im Nehmerzylindergehäuse 15 angeordnet, womit das Nehmerzylindergehäuse 15 axial weniger Bauraum benötigt. Der Raum zwischen dem Ausrücklager 9 und dem Nehmerzylindergehäuse 15 ist für die Aufnahme des Ausrücklagers 9 vorgesehen, welches sich in Fig. 1 im ausgerückten Zustand befindet. Eine Kopplung ist über das Kopplungselement 11, insbesondere über den Belag 10 zu den Zungen 8 der Tellerfeder 4 hin gewährleistet.

Der Kupplungsdeckel 1 weist ein Ringelement 3 auf, welches einstückig mit dem Kupplungsdeckel 1 ausgeführt sein kann oder in diesem einliegt. Das Ringelement 3 wird zur Auflage der Tellerfeder 4 verwendet, die den Aufpressring 5 gegenüber dem Ringelement 3 im gekuppelten Zustand gegen die Kupplungsscheibe presst, die nicht abgebildet ist, und damit eine Kupplungskraft auf den Aufpressring 5 überträgt.

Das Stützelement 17 ist mittels der Zentrierbolzen 6 am Kupplungsdeckel 1 befestigt, wobei der Zentrierbolzen 6 sowohl am Kupplungsdeckel, als auch am Stützelement 17 mittels einer Vernietung 23 befestigt ist. Somit überträgt der Kupplungsdeckel seine axiale Haltekraft auf den Zentrierbolzen 6 und nachfolgend auf das Halteelement 17, welches die Haltekraft weiter auf die Stützlagerung 15 überträgt, die in der Lageraufnahme 18 des Stützelementes 17 befestigt ist oder zumindest axial gehalten wird.

Die Stützlagerung 15 wird aus einem einreihigen Kugellager gebildet, welches mittels eines offenen Fixierringes 16 auf der Führungshülse 12 befestigt, oder zumindest axial befestigt ist.

Die Zentrierbolzen 6 sind dazu vorgesehen, die Zentrierung der Stützfeder 7 zu gewährleisten und übernehmen in diesem Ausführungsbeispiel eine Doppelfunktion, in dem auch die Haltung des Stützelementes 17 durch die Anbindung an den Kupplungsdeckel 1 bewerkstelligt wird.

Vorteilhafterweise ist das Stützelement 17 als Stützblech ausgeführt, womit sich die Formgebung auf kalte Umformung, insbesondere Tiefziehen, kostengünstiger Weise beschränken kann. Das Stützelement 17 weist einen radial außenliegenden Befestigungsbereich 20, einen Mittelbereich 19 und eine Lageraufnahme 18 auf, wobei der Mittelbereich 19 den Befestigungsbereich 20 und die Lageraufnahme 18 miteinander verbindet.

Vorteilhafterweise kann der Kragen 2 nunmehr axial in Richtung Ausrücklager 9 aufgestellt werden, womit eine höhere Stabilität des Kupplungsdeckels 1 erreicht werden kann. In Kupplungen des Stand der Technik ist dies bisher nicht möglich gewesen, zumal aufgrund des deckelfesten Ausrückers an dieser Stelle in der Regel eine Anbindung an den Ausrücker erfolgen musste.

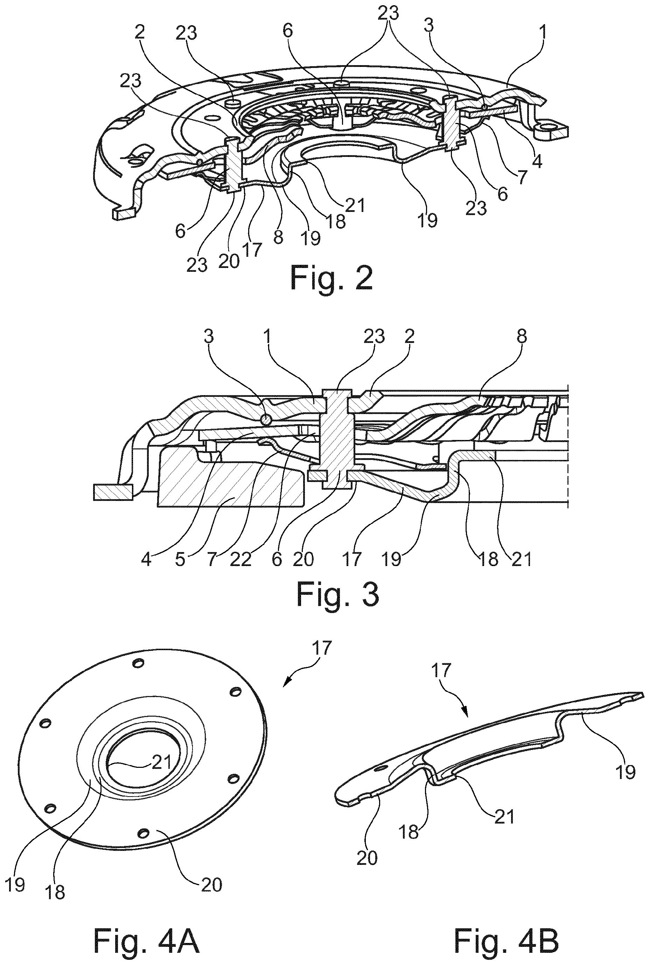

Fig. 2 und Fig. 3 zeigen Bauteile der Kupplung mit deckelfestem Ausrücker aus Fig. 1.

Insgesamt werden sechs Zentrierbolzen 6 verwendet um das Stützelement 17 am Kupplungsdeckel 1 zu befestigen, wobei die Bolzen 6 beidseitig mit einer Vernietung 23 versehen werden. Das gesamte Stützelement 17 und auch das nicht abgebildete Wälzlager 15 können nunmehr im Wesentlichen innerhalb des Kupplungsdeckels 1 angeordnet werden. Dies führt zu einem Herstellungsvorteil, zumal die Zentrierbolzen 6 ohnehin für die Stützfeder 7 installiert werden müssen. Sobald die Vernietung 23 am Kupplungsdeckel 1 vollzogen ist, kann das Aufsetzen des Stützelements 17 erfolgen, worauf die Vernietung 23 am Stützelement 17 für alle sechs Zentrierbolzen 6 umgesetzt wird. Damit lässt sich die Installation des Stützelements 17 sehr leicht in den Herstellungsprozess einer Kupplung integrieren.

Des Weiteren wird ein Standardlager als Stützlagerung 15 (siehe Fig. 1) in die Topfung des Stützelements 17 gepresst, welche aus der Stützlageraufnahme 18 und dem ringförmigen Begrenzungsteil 21 sowie teilweise durch den Mittelbereich 19 gebildet wird.

Der Mittelbereich 19 kann hierbei leicht bauchig ausgeführt werden, womit eine gute Stabilität bei geringem Materialaufwand für das Stützelement 17 erreicht wird.

In Fig. 4A und Fig. 4B wird das Stützelement 17 nochmals als einzelnes Bauteil gezeigt. Grundsätzlich kann die Anzahl der Befestigungselemente, die zur Befestigung des Stützelements am Kupplungsdeckel 1 dienen, variiert werden. Hierbei muss ein Kompromiss zwischen erforderlicher Stabilität und kostengünstiger Herstellung erzielt werden.

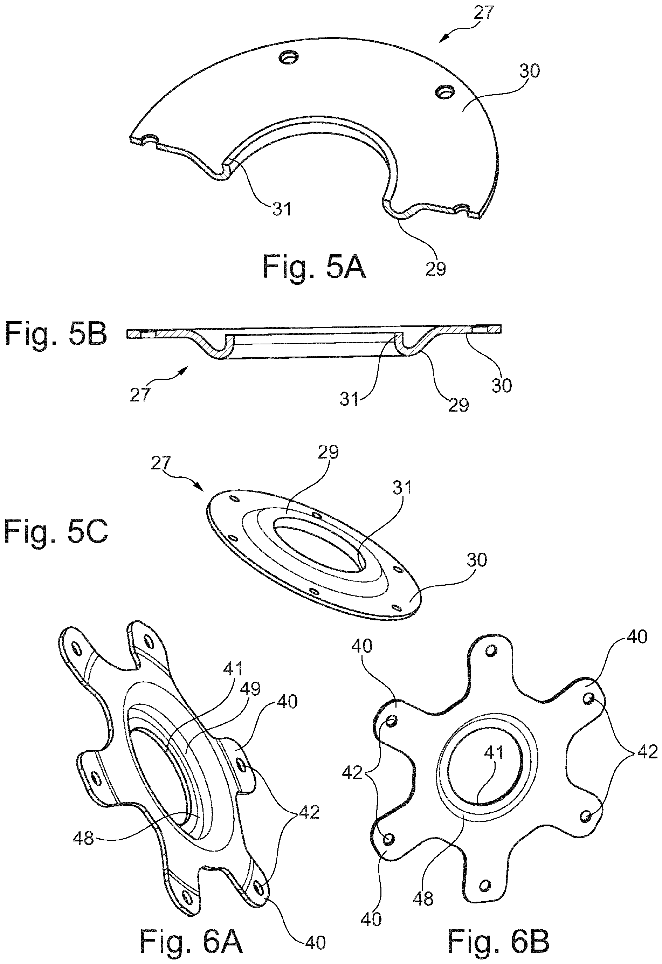

Fig. 5A und Fig. 5B zeigen ein zweites Ausführungsbeispiel eines Stützelementes 27, welches einen Befestigungsbereich 30 mit Bohrungen aufweist, die zur Befestigung eines Befestigungselementes vorgesehen sind. Das Stützelement 27 eignet sich insbesondere zur Herstellung durch Kaltumformung, weil die Lageraufnahme 31 ohne axiale Begrenzung ausgeführt ist und damit bei der Umformung genügend Material für eine Auswölbung 29 im Mittelbereich vorhanden ist.

Fig. 5C zeigt das Stützelement 27 ungeschnitten in perspektivischer Ansicht.

Fig. 6A und Fig. 6B zeigen ein sternförmiges Stützelement, welches zungenförmige Befestigungsbereiche 40 aufweist, die sich radial nach außen erstrecken und jeweils eine Bohrung 42 aufweisen. Die zungenförmigen Befestigungsbereiche 40 sind radial derart verlängert, dass sie das sternförmige Stützelement als ein Stützrad mit insgesamt 6 Speichen weiterbilden.

Die Topfung des Stützelementes weist ein ringförmiges Begrenzungsteil 41 auf, welches das Einpressen der Stützlagerung in die zylindrische Aufnahme 48 erleichtert. Der Mittelbereich 49 verbindet die zungenförmigen Befestigungsbereiche 40 mit der Topfung.

Das Stützelement bildet insgesamt ein materialarmes aber den Herstellungsprozess vorteilhaft unterstützendes Bauteil aus.

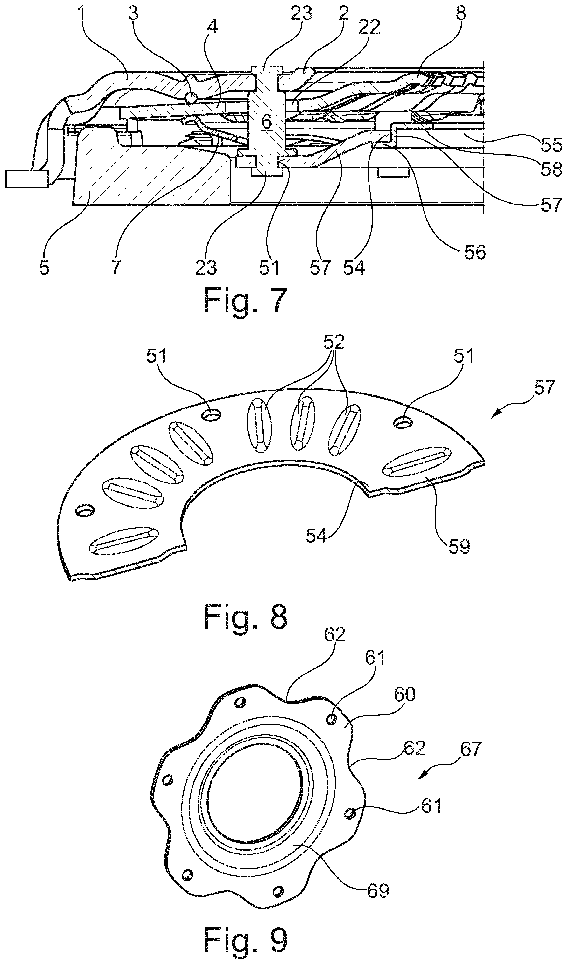

Fig. 7 zeigt eine Kupplung ohne Kupplungsscheibe, aber mit einem Stützelement 57, welches über Zentrierbolzen 6 am Kupplungsdeckel 1 befestigt ist und in seinem Anschlussbereich 54 eine Hülse 58 aufweist, welche als separates Bauteil am Anschlussbereich 54, beispielsweise durch Schweißung oder Einpressung, befestigt ist. Die Hülse 58 weist einen axial begrenzenden Ring 55 auf, der über die eigentliche Lageraufnahme 57 mit einem Anschlagsbereich 56 verbunden ist. Daran ist vorteilhaft, dass die Hülse 58 mit Formen ausgestattet werden kann, die durch Stanzen und Tiefziehen des Stützelementes 57 nicht erreicht werden können. Generell kann die Hülse 58 als Adapter zur Stützlagerung fungieren, indem unterschiedliche Stützlager eingesetzt werden können und die Hülse 48 mit einer entsprechenden Bemaßung an die jeweilige Stützlagerung beziehungsweise das Stützelement 57 angepasst ist.

Fig. 8 zeigt das Stützelement 57 aus Fig. 7 mit einem strukturell stabilisierten Mittelbereich 59, der den Befestigungsbereich mit den Bohrungen 51 mit dem Anschlussbereich 54 verbindet. Die Sicken 52 sind durch Kaltumformung herausgebildete, in Radialrichtung verlaufende Rinnen und umseitig in Radialrichtung verlaufende Bäuche. Somit kann Materialverformungen des Stützelements 57 während des Betriebes, beispielsweise durch hohe Temperaturen oder hohe mechanische Belastung, wirksam entgegengewirkt werden.

Fig. 9 zeigt ein Stützelement 67 mit einer sternförmigen Struktur, die durch zungenartige Befestigungsbereiche 60 mit jeweils einer Bohrung 61 gebildet ist. In Umfangsrichtung sind zwischen benachbarten Befestigungsbereichen 60 Radialsenkungen 62 zur Minimierung des Materialaufwandes eingebracht.

Zusammenfassend betrifft die Erfindung eine Kupplung mit einem deckelfesten Ausrücker, wobei ein Kupplungsdeckel 1 der Kupplung mittelbar über ein Stützelement 17,27,57,67 mit einer Stützlagerung 15 den Ausrücker axial in deckelfester Position hält. Es ist beabsichtigt, ohne funktionale Einbußen ein vorteilhaft herstellbares Konzept für die Anbindung des deckelfesten Ausrückers an den Kupplungsdeckel 1 zu konzipieren. Dazu wird vorgeschlagen, eine Tellerfeder 4 zur Beaufschlagung einer Kupplungskraft axial teilweise zwischen den Kupplungsdeckel 1 und dem Stützelement 17,27,57,67 anzuordnen. Damit ist es möglich, das Stützelement 17,27,57,67 axial in die Nähe einer Anpressplatte 5, einer Kupplungsscheibe oder einer Stützfeder 7 anzuordnen, womit ein Bauraumvorteil entsteht, der sich auch positiv auf die Herstellung auswirkt.

### Bezugszeichenliste

- 1: Kupplungsdeckel
- 2: Kragen
- 3: Ringelement
- 4: Tellerfeder
- 5: Aufpressring
- 6: Zentrierbolzen
- 7: Stützfeder
- 8: Tellerfederzunge
- 9: Ausrücklager
- 10: Belag
- 11: Kopplungselement
- 12: Führungshülse
- 13: Außenring
- 14: Wälzlager
- 15: Nehmerzylindergehäuse
- 16: Fixierring/Schnappring
- 17: Stützelement
- 18: Lageraufnahme
- 19: Mittelbereich
- 20: Befestigungsbereich
- 21: ringförmiges Begrenzungsteil
- 22: Ausnehmung
- 23: Vernietung
- 24: Kontaktfläche
- 26: Halteblech
- 27: Stützelement
- 29: Auswölbung
- 30: Befestigungsbereich
- 31: Lageraufnahme
- 40: zungenförmiger Befestigungsbereich
- 41: ringförmiges Begrenzungsteil
- 43: Bohrung
- 48: zylindrische Aufnahme
- 49: Übergangsbereich
- 51: Bohrung
- 52: Sicke
- 54: Anschlussbereich
- 55: axial begrenzender Ring
- 56: Anschlussbereich
- 57: Stützelement
- 58: Hülse
- 59: radialer Mittelbereich
- 60: zungenförmiger Befestigungsbereich
- 61: Bohrung
- 62: Radialsenkung
- 67: Stützelement
- 69: Topfung

## Patentansprüche

1. Kupplung mit deckelfestem Ausrücker, wobei ein Kupplungsdeckel (1) der Kupplung mittelbar über ein Stützelement (17,27,57,67) mit einer Stützlagerung (15) den Ausrücker axial in deckelfester Position hält, und eine Tellerfeder (4) zur Beaufschlagung einer Kupplungskraft axial teilweise zwischen dem Kupplungsdeckel (1) und dem Stützelement (17,27,57,67) angeordnet ist, **dadurch gekennzeichnet, dass** eine Stützfeder (7) sich in Anlage mit der Tellerfeder (4) befindet, und die Stützfeder (7) durch Zentrierbolzen (6), mittels derer das Stützelement (17,27,57,67) am Kupplungsdeckel (1) befestigt ist, zentriert ist.

2. Kupplung nach Anspruch 1, wobei die Zentrierbolzen (6) mit dem Kupplungsdeckel (1) und/oder mit dem Stützelement (17,27,57,67) vernietet sind.

3. Kupplung nach Anspruch 1 oder 2, wobei wenigstens ein Befestigungsbereich (40,60) des Stützelements (67) in Radialrichtung zungenförmig ausgebildet ist, insbesondere wobei mehrere zungenförmige Befestigungsbereiche (40,60) in Umfangsrichtung von Radialsenkungen (42,62) separiert sind.

4. Kupplung nach einem der vorhergehenden Ansprüche, wobei das Stützelement (17,27,57,67), insbesondere in einem radialen Mittelbereich, strukturverstärkende Ausformungen, insbesondere Sicken (52), aufweist.

5. Kupplung nach einem der vorhergehenden Ansprüche, wobei das Stützelement (17,27,57,67) radial von der Anpressplatte (5) umfasst ist.

6. Kupplung nach einem der vorhergehenden Ansprüche, wobei das Stützelement (17,27,57,67) axial zwischen der Tellerfeder (4) und der Kupplungsscheibe angeordnet ist.

7. Kupplung nach einem der vorhergehenden Ansprüche, wobei eine Stützlageraufnahme (18,31,41,57) mittels einer Hülse (58) ausgebildet ist, wobei die Hülse (58) einstückig mit dem Stützelement (17,27,57,67) ausgeführt ist oder ein separates Bauteil bildet.

8. Kupplung nach einem der vorhergehenden Ansprüche, wobei die Stützlagerung (15) auf einer Führungshülse (12) oder auf einem Nehmerzylindergehäuse (15) des Ausrückers befestigt ist.

## Claims

1. Clutch having a clutch operator which is fixed to the cover, a clutch cover (1) of the clutch holding the clutch operator axially in a position, in which it is fixed to the cover, indirectly via a supporting element (17, 27, 57, 67) with a supporting bearing (15), and a disc spring (4) for applying a clutch force being arranged axially partially between the clutch cover (1) and the supporting element (17, 27, 57, 67), **characterized in that** a supporting spring (7) is situated in contact with the disc spring (4), and the supporting spring (7) is centred by way of centring pins (6), by means of which the supporting element (17, 27, 57, 67) is fastened to the clutch cover (1).

2. Clutch according to Claim 1, the centring pins (6) being riveted to the clutch cover (1) and/or to the supporting element (17, 27, 57, 67).

3. Clutch according to Claim 1 or 2, at least one fastening region (40, 60) of the supporting element (67) being of tongue-shaped configuration in the radial direction, a plurality of tongue-shaped fastening regions (40, 60), in particular, being separated by radial depressions (42, 62) in the circumferential direction.

4. Clutch according to one of the preceding claims, the supporting element (17, 27, 57, 67) having structure-reinforcing shaped-out formations, in particular beads (52), in particular in a radial central region.

5. Clutch according to one of the preceding claims, the supporting element (17, 27, 57, 67) being enclosed radially by the pressure plate (5).

6. Clutch according to one of the preceding claims, the supporting element (17, 27, 57, 67) being arranged axially between the disc spring (4) and the clutch plate.

7. Clutch according to one of the preceding claims, a supporting bearing seat (18, 31, 41, 57) being configured by means of a sleeve (58), the sleeve (58) being configured in one piece with the supporting element (17, 27, 57, 67) or forming a separate component.

8. Clutch according to one of the preceding claims, the supporting bearing (15) being fastened on a guide sleeve (12) or on a slave cylinder housing (15) of the clutch operator.

## Revendications

1. Embrayage doté d'un dispositif de débrayage à chapeau fixe, dans lequel un chapeau d'embrayage (1) de l'embrayage maintient le dispositif de débrayage axialement en position de chapeau fixe indirectement au moyen d'un élément de soutien (17, 27, 57, 67) avec un palier de soutien (15), et un plateau élastique (4) est disposé axialement en partie entre le chapeau d'embrayage (1) et l'élément de soutien (17, 27, 57, 67) afin d'exercer une force d'embrayage, **caractérisé en ce qu'**un ressort de soutien (7) se trouve en appui sur le plateau élastique (4), et le ressort de soutien (7) est centré par des boulons de centrage (6), au moyen desquels l'élément de soutien (17, 27, 57, 67) est fixé au chapeau d'embrayage (1).

2. Embrayage selon la revendication 1, dans lequel les boulons de centrage (6) sont rivés au chapeau d'embrayage (1) et/ou à l'élément de soutien (17, 27, 57, 67).

3. Embrayage selon la revendication 1 ou 2, dans lequel au moins une région de fixation (40, 60) de l'élément de soutien (67) est configurée en forme de languette en direction radiale, en particulier dans lequel plusieurs régions de fixation en forme de languette (40, 60) sont séparées en direction périphérique par des enfoncements radiaux (42, 62).

4. Embrayage selon l'une quelconque des revendications précédentes, dans lequel l'élément de soutien (17, 27, 57, 67) présente, en particulier dans une région radiale moyenne, des déformations de renforcement de structure, en particulier des moulures (52).

5. Embrayage selon l'une quelconque des revendications précédentes, dans lequel l'élément de soutien (17, 27, 57, 67) est entouré radialement par le plateau de pression (5).

6. Embrayage selon l'une quelconque des revendications précédentes, dans lequel l'élément de soutien (17, 27, 57, 67) est disposé axialement entre le plateau élastique (4) et le disque d'embrayage.

7. Embrayage selon l'une quelconque des revendications précédentes, dans lequel un logement de palier de soutien (18, 31, 41, 57) est formé au moyen d'une douille (58), dans lequel la douille (58) est réalisée d'une seule pièce avec l'élément de soutien (17, 27, 57, 67) ou forme un composant séparé.

8. Embrayage selon l'une quelconque des revendications précédentes, dans lequel le palier de soutien (15) est fixé sur une douille de guidage (12) ou sur un boîtier de cylindre récepteur (15) du dispositif de débrayage.
